(19) **Europäisches Patentamt**
**European Patent Office**
**Office européen des brevets**

(11) **EP 4 679 784 A1**

(12) **EUROPEAN PATENT APPLICATION**
published in accordance with Art. 153(4) EPC

(43) Date of publication:
**14.01.2026 Bulletin 2026/03**

(21) Application number: **23929095.0**

(22) Date of filing: **25.03.2023**

(51) International Patent Classification (IPC):
**H04L 25/03** (2006.01)

(52) Cooperative Patent Classification (CPC):
**H04L 25/03**

(86) International application number:
**PCT/CN2023/083908**

(87) International publication number:
**WO 2024/197493 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **MA, Qianli**
  **Shenzhen, Guangdong 518129 (CN)**
• **HUANG, Huang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) Embodiments of this application provide a communication method and apparatus, to implement phase noise estimation in a multi-user spatial multiplexing multi-stream or single-user multi-stream non-coherent crystal oscillator scenario, and can be applied to a 5G communication system. The communication method includes: generating a first time domain signal and sending the first time domain signal, where a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal.

FIG. 7

**Description**

**TECHNICAL FIELD**

Embodiments of this application relate to the communication field, and in particular, to a communication method and apparatus.

**BACKGROUND**

Frequency bands for 6G and beyond (including 28 GHz, 39 GHz, 60 GHz, 73 GHz, and the like) offer abundant high frequency band resources, and are becoming a research and development focus currently. High frequency bands feature a high bandwidth and highly integrated antenna arrays, to achieve a high throughput. However, the foregoing features cause a serious intermediate frequency/radio frequency distortion problem, for example, a phase noise (phase noise, PHN), a center frequency offset (carrier frequency offset, CFO), and a Doppler frequency shift, which all results in a phase error. Consequently, a high-frequency communication system deteriorates in performance or even cannot operate.

For the phase noise, in a new radio (new radio, NR) protocol, a phase tracking reference signal (phase tracking reference signal, PTRS) is used for both a cyclic prefix orthogonal frequency division multiplexing (cyclic prefix orthogonal frequency division multiplexing, CP-OFDM) waveform and a discrete Fourier transform spread orthogonal frequency division multiplexing (discrete Fourier transformation spread OFDM, DFT-s-OFDM) waveform, to compensate for the phase noise and improve demodulation performance in a phase noise condition.

At present, a design scheme in which a PTRS is used for a DFT-s-OFDM waveform is as follows: The PTRS and data are mapped together to a time domain signal that is present before discrete Fourier transform (discrete Fourier transform, DFT) is performed, a DFT operation is performed on the time domain signal to which the PTRS and the data are mapped to obtain a frequency domain signal, and then subcarrier mapping and inverse fast Fourier transform (inverse fast Fourier transform, IFFT) are performed on the frequency domain signal to obtain a DFT-s-OFDM time domain signal. However, in the PTRS design scheme, the PTRS is processed only in time domain, and a residual phase noise is not processed during frequency domain channel equalization. Especially in a multi-user spatial multiplexing multi-stream or single-user multi-stream non-coherent crystal oscillator scenario, interference between a plurality of data streams affects time domain demodulation, and consequently processing performance of a receive end deteriorates. Therefore, how to implement phase noise estimation in the multi-user spatial multiplexing multi-stream or single-user multi-stream non-coherent crystal oscillator scenario becomes an urgent problem to be resolved.

**SUMMARY**

Embodiments of this application provide a communication method and apparatus, to implement phase noise estimation in a multi-user spatial multiplexing multi-stream or single-user multi-stream non-coherent crystal oscillator scenario.

To achieve the foregoing objective, the following technical solutions are used in embodiments of this application.

According to a first aspect, a communication method is provided. The method may be performed by a first device; may be performed by a component of the first device, for example, a processor, a chip, or a chip system of the first device; or may be implemented by a logical module or software that can implement all or some functions of the first device. The following uses an example in which the method is performed by the first device for description. The first device may be a terminal device or a network device. The method includes: generating a first time domain signal and sending the first time domain signal, where a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal.

According to the communication method, the first signal at a specific frequency domain position on the second frequency domain signal is transformed into the second signal with an invariable amplitude and phase, to obtain the first frequency domain signal corresponding to the first time domain signal, so that a receive end can parse the first time domain signal to obtain the second signal, and perform phase noise estimation in frequency domain by using the second signal. This can resolve a problem that a phase noise cannot be processed because of frequency domain channel equalization in a phase noise estimation process performed by using an existing PTRS scheme in time domain, thereby implementing phase noise estimation in a multi-user spatial multiplexing multi-stream or single-user multi-stream non-coherent crystal oscillator scenario.

In a possible design scheme, the second signal may satisfy the following relationship: $X(n) = Ae^{j\cdot\theta}$, n is a sequence number of a frequency domain resource unit on which the second signal is located, $X(n)$ is the second signal on the $n^{th}$ frequency domain resource unit, A is the amplitude of the second signal, and $\theta$ is the phase of the second signal.

In a possible design scheme, the second signal may satisfy the following relationship: $X(n) = Ae^{j2\pi b}$, n is a sequence number of a frequency domain resource unit on which the second signal is located, $X(n)$ is the second signal on the $n^{th}$ frequency domain resource unit, A is the amplitude of the second signal, b is a radian value of the second signal, and $2\pi b$ is the phase of the second signal.

In a possible design scheme, the first frequency domain position may include one or more frequency domain resource units.

In a possible design scheme, that the amplitude of the second signal is determined based on the amplitude of the first signal may include: The amplitude of the second signal is determined from a first amplitude set based on the amplitude of the first signal. According to the design scheme, for a second signal at each frequency domain position, an invariable amplitude may be determined from a candidate amplitude set based on an amplitude of a first signal at a corresponding frequency domain position, so that the receive end can uniquely determine an amplitude from the candidate amplitude set based on a signal obtained through parsing, to perform phase noise estimation in frequency domain.

In a possible design scheme, that the amplitude of the second signal is determined based on the amplitude of the first signal may include: When the amplitude of the first signal is greater than or equal to a first amplitude threshold, the amplitude of the second signal is the amplitude of the first signal; or when the amplitude of the first signal is less than the first amplitude threshold, the amplitude of the second signal is one amplitude in a first amplitude set. According to the design scheme, when the amplitude (energy) of the first signal is large enough, a transmit end may use the amplitude of the first signal as the amplitude of the second signal, so that estimation performance of the receiver can be improved.

In a possible design scheme, that the amplitude of the second signal is determined based on the amplitude of the first signal may include: When the amplitude of the first signal is greater than a first amplitude threshold, the amplitude of the second signal is the amplitude of the first signal; or when the amplitude of the first signal is less than or equal to the first amplitude threshold, the amplitude of the second signal is one amplitude in a first amplitude set.

In a possible design scheme, the first amplitude set may be determined from a plurality of candidate amplitude sets. According to the design scheme, the transmit end may select, from the plurality of preconfigured candidate amplitude sets, an appropriate candidate amplitude set as the first amplitude set based on a current communication environment (for example, a signal-to-noise ratio), to reduce a range of candidate amplitudes. This can reduce complexity of signal parsing by the receive end, and improve processing efficiency.

In a possible design scheme, the communication method provided in this embodiment of this application may further include: sending first indication information, where the first indication information indicates the first amplitude set. According to the design scheme, the transmit end may indicate, by using the first indication information, the first amplitude set selected from the plurality of candidate amplitude sets, so that the receive end can determine a candidate amplitude range based on the first indication information. This can reduce complexity of signal parsing by the receive end, and improve processing efficiency.

In a possible design scheme, that the phase of the second signal is determined based on the phase of the first signal may include: The phase of the second signal is determined from a candidate phase set based on the phase of the first signal. According to the design scheme, for a second signal at each frequency domain position, an invariable phase may be determined from a candidate amplitude set based on a phase of a first signal at a corresponding frequency domain position, so that the receive end can uniquely determine a phase from a candidate phase set based on a signal obtained through parsing, to perform phase noise estimation in frequency domain.

In a possible design scheme, the first time domain signal is obtained by performing subcarrier mapping and time-domain to frequency-domain transformation on the first frequency domain signal. In this embodiment of this application, the first time domain signal may be a DFT-s-OFDM signal.

In a possible design scheme, the communication method provided in this embodiment of this application may further include: sending second indication information, where the second indication information indicates the first frequency domain position. According to the design scheme, the transmit end may notify, by using the second indication information, the receive end of a frequency domain position specified for the second signal, so that the receive end performs phase noise estimation by using the second signal at the specific frequency domain position. In this embodiment of this application, the first frequency domain position may be alternatively preconfigured, or may be determined by the transmit end and the receive end through negotiation. This is not specifically limited in embodiments of this application.

In a possible design scheme, the second frequency domain signal is obtained by performing time-domain to frequency-domain transformation on a second time domain signal, the second time domain signal includes one or more third signals, and a quantity of third signals is determined based on a length of the second time domain signal and a quantity of second signals. According to the design scheme, the one or more third signals may be disposed on the second time domain signal corresponding to the second frequency domain signal, and the quantity of third signals is determined based on the length of the second time domain signal and the quantity of second signals. The third signal may be used to eliminate a noise signal caused by the second signal, to avoid a problem that a performance loss of a sent signal is excessively large because of the noise signal caused by the second signal in a case of higher-order modulation and a high code rate. For example, the third signal may be a time domain signal having low PAPR impact, like a ZC (Zadoff-Chu) sequence, a $\pi/2$-

BPSK signal, or a replicated data signal.

In a possible design scheme, that the quantity of third signals is determined based on the length of the second time domain signal and the quantity of second signals may include: The quantity of third signals is equal to a first quantity, or the quantity of third signals is an integer multiple of the first quantity, and the first quantity is obtained by rounding up or down a value that is obtained by dividing the length of the second time domain signal by the quantity of second signals.

In a possible design scheme, the plurality of third signals are placed consecutively or at intervals on the second time domain signal.

In a possible design scheme, the second signals are equally spaced in frequency domain on the second frequency domain signal. According to the design scheme, the second signals are equally spaced in frequency domain, so that the sent signal can traverse all channels, to improve a signal sending gain.

In a possible design scheme, that the second signals are equally spaced in frequency domain on the second frequency domain signal includes: The second signals are placed at an interval of X frequency domain resource units on the second frequency domain signal, or the second signals are placed at an interval of X frequency domain resource units in every Y frequency domain resource units on the second frequency domain signal, where X and Y are positive integers.

In a possible design scheme, there are a plurality of first time domain signals, and each first time domain signal is corresponding to one antenna port. According to the design scheme, a plurality of antenna ports may multiplex a same time-frequency resource to send first time domain signals.

In a possible design scheme, second signals corresponding to antenna ports are at different first frequency domain positions.

In a possible design scheme, only one second signal is not 0 in second signals that are corresponding to a plurality of antenna ports and that are at a same frequency domain position. According to the design scheme, in a scenario with multiple antenna ports, the second signals that are set on first frequency domain signals corresponding to the antenna ports are kept orthogonal to each other.

According to a second aspect, a communication method is provided. The method may be performed by a second device; may be performed by a component of the second device, for example, a processor, a chip, or a chip system of the second device; or may be implemented by a logical module or software that can implement all or some functions of the second device. The following uses an example in which the method is performed by the second device for description. The second device may be a terminal device or a network device. The method includes: receiving a first time domain signal, where a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal; and determining the second signal based on the first time domain signal, and performing phase noise estimation based on the second signal.

In a possible design scheme, the second signal may satisfy the following relationship: $X(n) = Ae^{j,\theta}$, n is a sequence number of a frequency domain resource unit on which the second signal is located, $X(n)$ is the second signal on the $n^{th}$ frequency domain resource unit, A is the amplitude of the second signal, and $\theta$ is the phase of the second signal.

In a possible design scheme, the second signal may satisfy the following relationship: $X(n) = Ae^{j2\pi b}$, n is a sequence number of a frequency domain resource unit on which the second signal is located, $X(n)$ is the second signal on the $n^{th}$ frequency domain resource unit, A is the amplitude of the second signal, b is a radian value of the second signal, and $2\pi b$ is the phase of the second signal.

In a possible design scheme, the first frequency domain position may include one or more frequency domain resource units.

In a possible design scheme, that the amplitude of the second signal is determined based on the amplitude of the first signal may include: The amplitude of the second signal is determined from a first amplitude set based on the amplitude of the first signal.

In a possible design scheme, that the amplitude of the second signal is determined based on the amplitude of the first signal may include: When the amplitude of the first signal is greater than or equal to a first amplitude threshold, the amplitude of the second signal is the amplitude of the first signal; or when the amplitude of the first signal is less than the first amplitude threshold, the amplitude of the second signal is one amplitude in a first amplitude set.

In a possible design scheme, that the amplitude of the second signal is determined based on the amplitude of the first signal may include: When the amplitude of the first signal is greater than a first amplitude threshold, the amplitude of the second signal is the amplitude of the first signal; or when the amplitude of the first signal is less than or equal to the first amplitude threshold, the amplitude of the second signal is one amplitude in a first amplitude set.

In a possible design scheme, the first amplitude set may be determined from a plurality of candidate amplitude sets.

In a possible design scheme, the communication method provided in this embodiment of this application may further include: receiving first indication information, where the first indication information indicates the first amplitude set.

In a possible design scheme, that the phase of the second signal is determined based on phase of the first signal may include: The phase of the second signal is determined from a candidate phase set based on the phase of the first signal.

In a possible design scheme, the first time domain signal is obtained by performing subcarrier mapping and time-domain to frequency-domain transformation on the first frequency domain signal.

In a possible design scheme, the communication method provided in this embodiment of this application may further include: receiving second indication information, where the second indication information indicates the first frequency domain position.

In a possible design scheme, the second frequency domain signal is obtained by performing time-domain to frequency-domain transformation on a second time domain signal, the second time domain signal includes one or more third signals, and a quantity of third signals is determined based on a length of the second time domain signal and a quantity of second signals.

In a possible design scheme, that the quantity of third signals is determined based on the length of the second time domain signal and the quantity of second signals may include: The quantity of third signals is equal to a first quantity, or the quantity of third signals is an integer multiple of the first quantity, and the first quantity is obtained by rounding up or down a value that is obtained by dividing the length of the second time domain signal by the quantity of second signals.

In a possible design scheme, the plurality of third signals are placed consecutively or at intervals on the second time domain signal.

In a possible design scheme, the second signals are equally spaced in frequency domain on the second frequency domain signal.

In a possible design scheme, that the second signals are equally spaced in frequency domain on the second frequency domain signal includes: The second signals are placed at an interval of X frequency domain resource units on the second frequency domain signal, or the second signals are placed at an interval of X frequency domain resource units in every Y frequency domain resource units on the second frequency domain signal, where X and Y are positive integers.

In a possible design scheme, there are a plurality of first time domain signals, and each first time domain signal is corresponding to one antenna port.

In a possible design scheme, second signals corresponding to antenna ports are at different first frequency domain positions.

In a possible design scheme, only one second signal is not 0 in second signals that are corresponding to a plurality of antenna ports and that are at a same frequency domain position.

For technical effects of the method according to the second aspect, refer to the described technical effects of the method according to the first aspect. Details are not described herein again.

According to a third aspect, a communication apparatus is provided to implement the foregoing methods. The communication apparatus may be the first device in the first aspect, an apparatus including the first device, or an apparatus included in the first device, for example, a chip. The communication apparatus includes a corresponding module, unit, or means (means) for implementing the method according to the first aspect. The module, unit, or means may be implemented by using hardware, software, or hardware executing corresponding software. The hardware or the software includes one or more modules or units corresponding to the foregoing functions.

In some possible designs, the communication apparatus includes a processing module and a transceiver module. The processing module is configured to generate a first time domain signal, where a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal. The transceiver module is configured to send the first time domain signal.

In a possible design scheme, the second signal may satisfy the following relationship: $X(n) = Ae^{j2\pi b}$, n is a sequence number of a frequency domain resource unit on which the second signal is located, $X(n)$ is the second signal on the $n^{th}$ frequency domain resource unit, A is the amplitude of the second signal, b is a signal frequency, and $2\pi b$ is the phase of the second signal.

In a possible design scheme, the first frequency domain position may include one or more frequency domain resource units.

In a possible design scheme, that the amplitude of the second signal is determined based on the amplitude of the first signal may include: The amplitude of the second signal is determined from a first amplitude set based on the amplitude of the first signal.

In a possible design scheme, that the amplitude of the second signal is determined based on the amplitude of the first signal may include: When the amplitude of the first signal is greater than or equal to a first amplitude threshold, the amplitude of the second signal is the amplitude of the first signal; or when the amplitude of the first signal is less than the first amplitude threshold, the amplitude of the second signal is one amplitude in a first amplitude set.

In a possible design scheme, that the amplitude of the second signal is determined based on the amplitude of the first signal may include: When the amplitude of the first signal is greater than a first amplitude threshold, the amplitude of the second signal is the amplitude of the first signal; or when the amplitude of the first signal is less than or equal to the first amplitude threshold, the amplitude of the second signal is one amplitude in a first amplitude set.

In a possible design scheme, the first amplitude set may be determined from a plurality of candidate amplitude sets.

In a possible design scheme, the transceiver module is further configured to send first indication information, where the first indication information indicates the first amplitude set.

In a possible design scheme, that the phase of the second signal is determined based on the phase of the first signal may include: The phase of the second signal is determined from a candidate phase set based on the phase of the first signal.

In a possible design scheme, the first time domain signal is obtained by performing subcarrier mapping and time-domain to frequency-domain transformation on the first frequency domain signal.

In a possible design scheme, the transceiver module is further configured to send second indication information, where the second indication information indicates the first frequency domain position.

In a possible design scheme, the second frequency domain signal is obtained by performing time-domain to frequency-domain transformation on a second time domain signal, the second time domain signal includes one or more third signals, and a quantity of third signals is determined based on a length of the second time domain signal and a quantity of second signals.

In a possible design scheme, that the quantity of third signals is determined based on the length of the second time domain signal and the quantity of second signals may include: The quantity of third signals is equal to a first quantity, or the quantity of third signals is an integer multiple of the first quantity, and the first quantity is obtained by rounding up or down a value that is obtained by dividing the length of the second time domain signal by the quantity of second signals.

In a possible design scheme, the plurality of third signals are placed consecutively or at intervals on the second time domain signal.

In a possible design scheme, the second signals are equally spaced in frequency domain on the second frequency domain signal.

In a possible design scheme, that the second signals are equally spaced in frequency domain on the second frequency domain signal includes: The second signals are placed at an interval of X frequency domain resource units on the second frequency domain signal, or the second signals are placed at an interval of X frequency domain resource units in every Y frequency domain resource units on the second frequency domain signal, where X and Y are positive integers.

In a possible design scheme, there are a plurality of first time domain signals, and each first time domain signal is corresponding to one antenna port.

In a possible design scheme, second signals corresponding to antenna ports are at different first frequency domain positions.

In a possible design scheme, only one second signal is not 0 in second signals that are corresponding to a plurality of antenna ports and that are at a same frequency domain position.

In a possible design scheme, the transceiver module may include a receiving module and a sending module. The sending module is configured to implement a sending function of the communication apparatus according to the third aspect, and the receiving module is configured to implement a receiving function of the communication apparatus according to the third aspect.

In a possible design scheme, the communication apparatus according to the third aspect may further include a storage module, and the storage module stores a program or instructions. When the processing module executes the program or instructions, the communication apparatus according to the third aspect is enabled to perform the method according to the first aspect.

For technical effects of the communication apparatus according to the third aspect, refer to the technical effects of the method according to the first aspect. Details are not described herein again.

According to a fourth aspect, a communication apparatus is provided to implement the foregoing methods. The communication apparatus may be the second device in the second aspect, an apparatus including the second device, or an apparatus included in the second device, for example, a chip. The communication apparatus includes a corresponding module, unit, or means (means) for implementing the method according to the second aspect. The module, unit, or means may be implemented by using hardware, software, or hardware executing corresponding software. The hardware or the software includes one or more modules or units corresponding to the foregoing functions.

In some possible designs, the communication apparatus includes a processing module and a transceiver module. The transceiver module is configured to receive a first time domain signal, where a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal. The processing module is configured to: determine the second signal based on the first time domain signal, and perform phase noise estimation based on the second signal.

In a possible design scheme, the second signal may satisfy the following relationship: $X(n) = Ae^{j2\pi b}$, n is a sequence number of a frequency domain resource unit on which the second signal is located, X(n) is the second signal on the $n^{th}$ frequency domain resource unit, A is the amplitude of the second signal, b is a signal frequency, and $2\pi b$ is the phase of the second signal.

In a possible design scheme, the first frequency domain position may include one or more frequency domain resource units.

In a possible design scheme, that the amplitude of the second signal is determined based on the amplitude of the first signal may include: The amplitude of the second signal is determined from a first amplitude set based on the amplitude of the first signal.

In a possible design scheme, that the amplitude of the second signal is determined based on the amplitude of the first signal may include: When the amplitude of the first signal is greater than or equal to a first amplitude threshold, the amplitude of the second signal is the amplitude of the first signal; or when the amplitude of the first signal is less than the first amplitude threshold, the amplitude of the second signal is one amplitude in a first amplitude set.

In a possible design scheme, that the amplitude of the second signal is determined based on the amplitude of the first signal may include: When the amplitude of the first signal is greater than a first amplitude threshold, the amplitude of the second signal is the amplitude of the first signal; or when the amplitude of the first signal is less than or equal to the first amplitude threshold, the amplitude of the second signal is one amplitude in a first amplitude set.

In a possible design scheme, the first amplitude set may be determined from a plurality of candidate amplitude sets.

In a possible design scheme, the transceiver module is further configured to receive first indication information, where the first indication information indicates the first amplitude set.

In a possible design scheme, that the phase of the second signal is determined based on the phase of the first signal may include: The phase of the second signal is determined from a candidate phase set based on the phase of the first signal.

In a possible design scheme, the first time domain signal is obtained by performing subcarrier mapping and time-domain to frequency-domain transformation on the first frequency domain signal.

In a possible design scheme, the transceiver module is further configured to receive second indication information, where the second indication information indicates the first frequency domain position.

In a possible design scheme, the second frequency domain signal is obtained by performing time-domain to frequency-domain transformation on a second time domain signal, the second time domain signal includes one or more third signals, and a quantity of third signals is determined based on a length of the second time domain signal and a quantity of second signals.

In a possible design scheme, that the quantity of third signals is determined based on the length of the second time domain signal and the quantity of second signals may include: The quantity of third signals is equal to a first quantity, or the quantity of third signals is an integer multiple of the first quantity, and the first quantity is obtained by rounding up or down a value that is obtained by dividing the length of the second time domain signal by the quantity of second signals.

In a possible design scheme, the plurality of third signals are placed consecutively or at intervals on the second time domain signal.

In a possible design scheme, the second signals are equally spaced in frequency domain on the second frequency domain signal.

In a possible design scheme, that the second signals are equally spaced in frequency domain on the second frequency domain signal includes: The second signals are placed at an interval of X frequency domain resource units on the second frequency domain signal, or the second signals are placed at an interval of X frequency domain resource units in every Y frequency domain resource units on the second frequency domain signal, where X and Y are positive integers.

In a possible design scheme, there are a plurality of first time domain signals, and each first time domain signal is corresponding to one antenna port.

In a possible design scheme, second signals corresponding to antenna ports are at different first frequency domain positions.

In a possible design scheme, only one second signal is not 0 in second signals that are corresponding to a plurality of antenna ports and that are at a same frequency domain position.

In a possible design scheme, the transceiver module may include a receiving module and a sending module. The sending module is configured to implement a sending function of the communication apparatus according to the fourth aspect, and the receiving module is configured to implement a receiving function of the communication apparatus according to the fourth aspect.

In a possible design scheme, the communication apparatus according to the fourth aspect may further include a storage module, and the storage module stores a program or instructions. When the processing module executes the program or instructions, the communication apparatus according to the fourth aspect is enabled to perform the method according to the second aspect.

For technical effects of the communication apparatus according to the fourth aspect, refer to the technical effects of the method according to the second aspect. Details are not described herein again.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method according to the first aspect or the second aspect.

According to a sixth aspect, a communication apparatus is provided, including at least one processor. The processor is configured to execute a computer program or instructions stored in a memory, so that the communication apparatus performs the method according to the first aspect or the second aspect. The memory may be coupled to the processor, or may be independent of the processor.

According to a seventh aspect, a communication apparatus (for example, the communication apparatus may be a chip or a chip system) is provided. The communication apparatus includes a processor, configured to implement functions in the first aspect or the second aspect.

In some possible designs, the communication apparatus includes a memory. The memory is configured to store necessary program instructions and/or data.

In a possible design scheme, the processor may be integrated with the memory.

In some possible designs, when the apparatus is a chip system, the apparatus may include a chip, or may include a chip and another discrete device.

According to an eighth aspect, a communication apparatus is provided, including a transceiver and a processor. The transceiver is used by the communication apparatus to exchange information with another communication apparatus. The processor executes program instructions to perform the method according to the first aspect or the second aspect.

In a possible design scheme, the communication apparatus according to the eighth aspect may further include a memory. The memory and the processor may be integrated, or may be disposed separately. The memory may be configured to store a computer program and/or data related to the method according to the first aspect or the second aspect.

According to a ninth aspect, a communication apparatus is provided. The communication apparatus is configured to perform the method according to the first aspect or the second aspect.

It should be understood that a corresponding module, unit, or means (means) for implementing the method according to the first aspect or the second aspect is included in the fifth aspect to the ninth aspect. The module, unit, or means may be implemented by using hardware, software, or hardware executing corresponding software. The hardware or the software includes one or more modules or units configured to perform functions in the foregoing methods.

It can be understood that when the communication apparatus provided in any one of the fifth aspect to the ninth aspect is a chip, the foregoing sending action/function can be understood as outputting, and the foregoing receiving action/function can be understood as inputting.

According to a tenth aspect, a computer-readable storage medium is provided. The computer-readable storage medium stores a computer program or instructions. When the computer program or instructions are run on a communication apparatus, the communication apparatus is enabled to perform the method according to the first aspect or the second aspect.

According to an eleventh aspect, a computer program product including instructions is provided. When the computer program product runs on a communication apparatus, the communication apparatus is enabled to perform the method according to the first aspect or the second aspect.

According to a twelfth aspect, a communication system is provided, including the first device according to the first aspect and the second device according to the second aspect.

## BRIEF DESCRIPTION OF DRAWINGS

FIG. 1 is diagrams of architectures of an OFDM system and a DFT-s-OFDM system according to an embodiment of this application;

FIG. 2 is waveform diagrams of multi-carrier waveforms according to an embodiment of this application;

FIG. 3 is diagrams of structures of phase noises according to an embodiment of this application;

FIG. 4 is a diagram of impact of a phase noise on a received signal according to an embodiment of this application;

FIG. 5 is a diagram of a structure of transmission with multiple antenna ports according to an embodiment of this application;

FIG. 6 is a diagram of an architecture of a communication system according to an embodiment of this application;

FIG. 7 is a schematic flowchart of a communication method according to an embodiment of this application;

FIG. 8 is diagrams of structures of placement of second signals according to an embodiment of this application;

FIG. 9 is diagrams of structures of placement of third signals according to an embodiment of this application;

FIG. 10 is a diagram of a structure of a communication apparatus according to an embodiment of this application; and

FIG. 11 is a diagram of a structure of another communication apparatus according to an embodiment of this application.

## DESCRIPTION OF EMBODIMENTS

For better understanding of embodiments of this application, the following several items are provided before embodiments of this application are described.

First, in embodiments of this application, "used to indicate" may include "directly indicate" and "indirectly indicate". When a piece of indication information is used to indicate A, the indication information may directly indicate A or indirectly indicate A, but it does not indicate that the indication information definitely carries A.

Information indicated by indication information is referred to as to-be-indicated information. In a specific implementation process, the to-be-indicated information is indicated in many manners, for example, but not limited to, the following manners: The to-be-indicated information may be directly indicated, for example, the to-be-indicated information or an index of the to-be-indicated information may be indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed. For example, alternatively, specific information may be indicated by using a sorting order of a variety of information pre-agreed (for example, specified in a protocol), to reduce indication overheads to some extent. In addition, common parts of all pieces of information may be further identified and then indicated together, to reduce indication overheads caused by separately indicating same information.

Moreover, specific indication manners may be various existing indication manners, for example, but not limited to, the foregoing indication manners and various combinations thereof. For specific details of the various indication manners, refer to the conventional technology. Details are not described in this specification. It can be learnt from the foregoing that, for example, when a plurality of pieces of information with a same type need to be indicated, different information may be indicated in different manners. In a specific implementation process, a needed indication manner may be selected depending on a specific requirement, and the selected indication manner is not limited in embodiments of this application. In this way, the indication manners in embodiments of this application should be understood as covering various methods that enable a to-be-indicated party to learn to-be-indicated information.

The to-be-indicated information may be sent as a whole, or may be separately sent in a form of a plurality of pieces of sub-information. Sending periodicities and/or sending occasions of these pieces of sub-information may be identical or different. A specific sending method is not limited in this application. The sending periodicities and/or the sending occasions of these pieces of sub-information may be predefined, for example, predefined according to a protocol; or may be configured by sending configuration information by a transmit-end device to a receive-end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, in embodiments of this application, "first", "second", and various numbers are merely used for differentiation for ease of description, and are not used to limit the scope of embodiments of this application. For example, the numbers are used to differentiate between different indication information. For another example, a first network area and a second network area are merely intended to distinguish between different areas, and are not intended to limit a sequence thereof. A person skilled in the art can understand that the terms such as "first" and "second" are not used to limit a quantity or an execution sequence, and that the terms such as "first" and "second" do not indicate a definite difference.

Third, in embodiments of this application, "predefinition" or "preconfiguration" may be implemented by prestoring corresponding code or a corresponding table in devices (for example, including a terminal device and a network device) or implemented in another manner that can be used to indicate related information. A specific implementation thereof is not limited in this application. "Storage" may mean storage in one or more memories. The one or more memories may be disposed separately, or may be integrated into an encoder, a decoder, a processor, or a communication apparatus. Alternatively, some of the one or more memories may be disposed separately, and some others may be integrated into a decoder, a processor, or a communication apparatus. A type of the memory may be a storage medium in any form. This is not limited in this application.

Fourth, in embodiments of this application, meanings expressed by "information (information)", "signal (signal)", "message (message)", "channel (channel)", and "signaling (signaling)" are consistent when differences of the terms are not emphasized. Terms "of (of)", "corresponding or relevant (corresponding, relevant)", and "corresponding (corresponding)" may sometimes be used interchangeably. It should be noted that meanings expressed by the terms are consistent when differences of the terms are not emphasized.

Fifth, in embodiments of this application, descriptions such as "when", "in a case", "provide that", and "if" all mean that a device (for example, a terminal device or a network device) performs corresponding processing in an objective situation, are not intended to limit time, do not require that the device (for example, the terminal device or the network device) should have a determining action during implementation, and do not mean that there are other limitations.

Sixth, in embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the term "example", "for example", or the like is intended to present a related concept in a specific manner for ease of understanding.

Seventh, technical solutions in embodiments of this application can be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet-of-vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5G mobile communication system like an NR system, and a future communication system like a 6G mobile communication system.

Various aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Finally, the network architectures and the service scenarios that are described in embodiments of this application are intended to describe the technical solutions in embodiments of this application more clearly, and do not constitute any limitation on the technical solutions provided in embodiments of this application. A person of ordinary skill in the art can know that as the network architectures evolve and new service scenarios emerge, the technical solutions provided in embodiments of this application are also applicable to similar technical problems.

For ease of understanding, the following first describes related technologies in embodiments of this application.

1. Orthogonal frequency division multiplexing (orthogonal frequency division multiplexing, OFDM) is a multi-carrier modulation (multi-carrier modulation, MCM) technology. A core idea of the OFDM is to divide a channel into several orthogonal subchannels, and perform narrowband modulation and transmission on each subchannel, thereby reducing mutual interference between subchannels. A signal bandwidth on each subchannel is smaller than a related bandwidth of the channel. Therefore, frequency selective fading on each subchannel is flat, which greatly cancels inter-symbol interference. In addition, because carriers of the subchannels in the OFDM system are orthogonal to each other, spectrums of the carriers overlap with each other. This reduces mutual interference between subcarriers, and improves spectrum utilization. The orthogonal modulation and demodulation on each subchannel may be implemented by using inverse fast Fourier transform (inverse fast Fourier transform, IFFT) and fast Fourier transform (fast Fourier transform, FFT) methods.

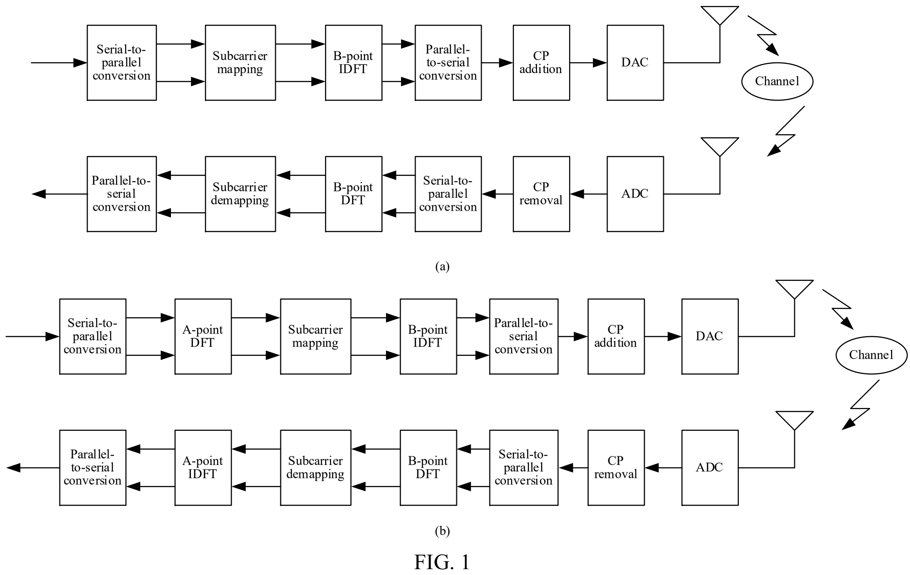

For example, (a) in FIG. 1 shows a diagram of an architecture of an OFDM system. As shown in (a) in FIG. 1, a transmit end sequentially performs serial-to-parallel conversion, subcarrier mapping, B-point inverse discrete Fourier transform (inverse discrete Fourier transform, IDFT) or IFFT modulation, parallel-to-serial conversion, cyclic prefix (cyclic prefix, CP) addition, and digital-to-analog conversion (digital-to-analog conversion, DAC) processing on an input signal to obtain an OFDM signal, and sends the OFDM signal to a receive end in a form of a radio frequency (radio frequency, RF) signal through an antenna port and a radio channel. Correspondingly, the receive end sequentially performs analog-to-digital conversion (analog-to-digital conversion, ADC), CP removal, serial-to-parallel conversion, B-point DFT or FFT modulation, subcarrier demapping, and parallel-to-serial conversion processing on the received OFDM signal to obtain data sent by the transmit end.

2. A DFT-s-OFDM technology, also referred to as a single-carrier OFDM technology or a linear precoding OFDM technology, is a single-carrier technology based on an OFDM waveform, that is, a modulation mode that uses multiple carriers to implement a single-carrier waveform. A procedure for the DFT-s-OFDM technology includes: before B-point IFFT or IDFT modulation of OFDM, performing A-point DFT transform on a signal to obtain a frequency domain signal, inserting zero symbols for spreading, and then transforming a spread spectrum signal into time domain information through IFFT. In other words, a transmit end may obtain a frequency domain sequence of a time domain discrete sequence through A-point DFT; and after subcarrier mapping is performed on the frequency domain sequence, the frequency domain sequence obtained through subcarrier mapping is input for IDFT, and B-point IDFT is performed, where A<B.

Because a length of the IDFT is greater than a length of the DFT, a part in which the length of the IDFT exceeds the length of the DFT is padded with zero during inputting. After the IDFT is performed, a cyclic prefix may be added to avoid symbol interference. As shown in (b) in FIG. 1, a difference from (a) in FIG. 1 lies in that, before performing subcarrier mapping on the input signal that has undergone the serial-to-parallel conversion processing, the transmit end performs additional A-point DFT processing. Correspondingly, a receive end performs A-point IDFT processing on a received signal that has undergone the subcarrier demapping processing. The DFT-mapping-IFFT operations are actually equivalent to convolution of a signal that is input before DFT and a sinc waveform. Compared with the OFDM waveform, a DFT-s-OFDM waveform can provide a higher output power and higher power amplification efficiency with a same power amplifier. This can increase coverage and reduce energy consumption.

The waveform obtained through DFT-s-OFDM modulation is almost equivalent to a conventional single-carrier waveform, and is a single carrier in essence. However, the waveform is easily compatible with the OFDM because the waveform uses a multi-carrier implementation. Therefore, such a waveform is used by protocols such as the 3rd Generation Partnership Project (the 3rd generation partnership project, 3GPP). In addition, because the DFT-s-OFDM waveform is a single carrier in essence, the DFT-s-OFDM waveform has a lower peak-to-average power ratio (peak-to-average power ratio, PAPR) compared with the OFDM waveform. In this way, transmit power efficiency of a terminal device can be improved, a battery life can be prolonged, and costs of the terminal device can be reduced.

3. PAPR is short for peak-to-average power ratio, and is a ratio of a peak value to an average value of an output signal. A radio signal is a sine wave with a changing amplitude in time domain, and the amplitude is not constant. An amplitude peak of the signal in one cycle is different from those in other cycles. Therefore, average powers and peak powers of all cycles are different. In a long period, a peak power is a maximum transient power that occurs at a specific probability, which is generally 0.01% (that is, $10^{-4}$). At this probability, a ratio of the peak power to a total average power of a system is a peak-to-average power ratio.

A factor affecting the PAPR may include a peak-to-average power ratio of a baseband signal and/or a peak-to-average power ratio caused by multi-carrier power superposition.

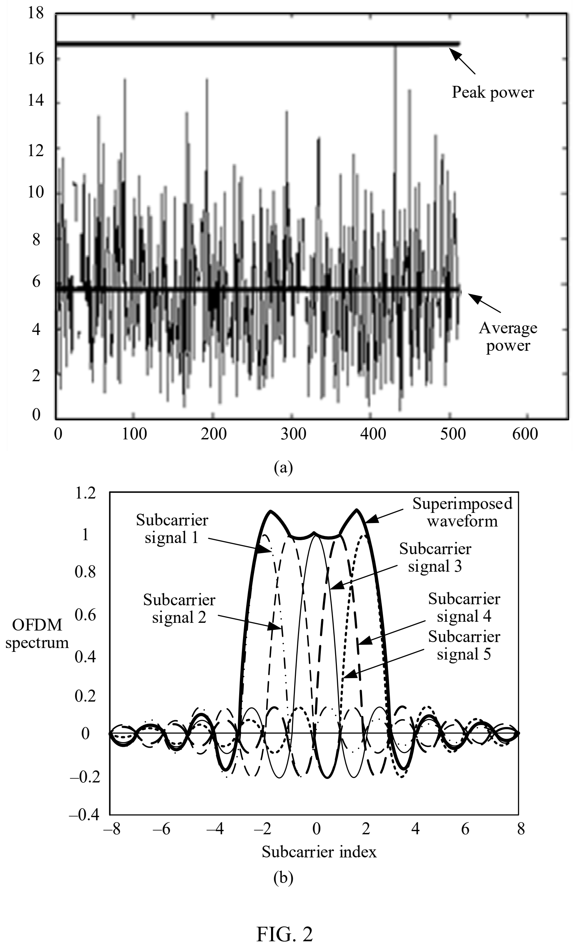

For example, for a baseband signal modulated by using 1024-quadrature amplitude modulation (quadrature amplitude modulation, QAM), a peak-to-average power ratio of the baseband signal is large. For a baseband signal whose signal energy is 1 and that is modulated by using quadrature phase shift keying (quadrature phase shift keying, QPSK), binary phase shift keying (binary phase shift keying, BPSK), or the like, a plurality of baseband signals may be superimposed to obtain a diagram of an amplitude change in a discrete signal shown in (a) in FIG. 2. It should be noted that, for the QPSK and BPSK, a signal amplitude is constant and only a phase is changed.

For example, a multi-carrier waveform modulation mode is OFDM. In OFDM, a signal on a carrier may be represented as a sinc function. Signals on a subcarrier shown in (b) are extended to left and right sides in FIG. 2, and leakage of a plurality of carriers may be superimposed at a distant location at a specific probability to form a point with a high peak power.

It should be noted that, before a signal of a communication system is transmitted, power amplification needs to be performed. Due to technical and cost limitations, one power amplifier usually performs linear amplification in only one range. If the range is exceeded, signal distortion is caused. Signal distortion causes a receive end to fail to correctly parse the signal. To ensure that a peak of the signal is still within the linear range of the power amplifier, an average power of the signal needs to be reduced. However, reducing the average power of the signal causes reduction in efficiency of the power amplifier, or reduction in a coverage area of the power amplifier. Therefore, to meet a coverage requirement, a signal generation technology with a low PAPR needs to be selected.

4. A phase noise, which is referred to as PN for short, means a random change in a phase of an output signal of a communication device (for example, various radio frequency components) caused by various types of noise of the communication device that sends a signal. To meet increasing communication requirements, frequency band resources of high frequency bands (frequency bands for 6G and beyond, mainly including 28 GHz, 39 GHz, 60 GHz, 73 GHz, and the like) are increasingly used in a communication system to transmit a signal. High frequency bands can provide a high bandwidth and a highly integrated antenna array for communication, thereby achieving a high throughput. However, a phase noise problem at a high frequency band is quite prominent. As the frequency band increases, a higher power spectrum density of a phase noise leads to greater impact on a received signal. When a frequency band for sending a signal is high, deterioration in the phase noise causes poor demodulation performance of the signal and impairs communication quality.

For example, impact of the phase noise may be expressed as follows:

$$y(n) = x(n)e^{j\theta_n},$$

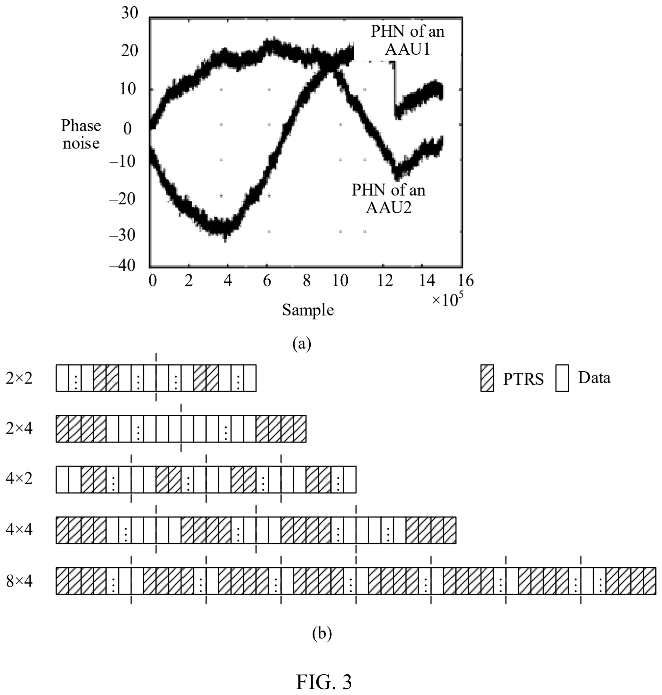

where y(n) represents a signal affected by the phase noise, x(n) represents a signal before the phase noise is applied, n is a time domain sample, and n=0, 1, ..., N-1. In brief, the phase noise is a random phase value generated at each sample n. For example, (a) in FIG. 3 shows a random phase change of an active antenna unit (active antenna unit, AAU) 1 and an AAU2 in a 60 megahertz (gigahertz, GHz) communication system within [-30, 20] degrees, that is, a phase noise change in the current system.

To reduce impact of the phase noise on demodulation performance, a PTRS is used for both the OFDM waveform and the DFT-s-OFDM waveform in an NR protocol. Phase noise estimation is performed based on the PTRS, to compensate for a phase error resulting from the phase noise, and improve communication performance of a communication system.

The PTRS in the DFT-s-OFDM is used as an example. In the 3GPP protocol, the PTRS in the DFT-s-OFDM is placed in a data field. To be specific, the PTRS is inserted into data, and a same signal processing procedure is performed on both the PTRS and the data. As shown in (b) in FIG. 3, each grid in the figure represents one sample, that is, one QAM symbol, one $\pi/2$ BPSK symbol, or one QPSK symbol. Parameters in (b) in FIG. 3 may include a number N of PTRS groups and a number M of samples per group, that is, a total quantity of PTRSs is N*M. Specific mapping locations are related to the two parameters and a scheduled bandwidth.

For example, when the number M of samples per group is 2, the scheduled bandwidth may be evenly divided into N segments or N intervals, and one PTRS group is mapped to the middle of each segment (interval), as shown in a first row and a third row in (b) in FIG. 3. When the number M of samples per group is 4, the scheduled bandwidth may be evenly divided into N segments or N intervals, and one PTRS group is mapped to each segment (interval). A PTRS group of a first segment (interval) is mapped to a header of the first segment, a PTRS group of an $N^{th}$ segment is mapped to a tail of the $N^{th}$ segment (interval), and PTRS groups of other segments (intervals) are mapped to the middle of the segments (intervals), as shown in a second row in (b) in FIG. 3 (there are only two segments (intervals) in this case, and therefore there is no PTRS group mapped to the middle of a segment (interval)), a fourth row, and a fifth row.

It should be noted that, the parameters N and M are implicitly determined by a current scheduled bandwidth based on a preconfigured mapping relationship (for example, a correspondence between a scheduled bandwidth and parameters listed in the following Table 1, where $N_{RB0}$ to $N_{RB4}$ are preconfigured values) in a transmission process. For a same terminal device and a same network device (with a same frequency and a same subcarrier spacing), scheduled bandwidths corresponding to five groups of parameters in (b) in FIG. 3 may show a monotonically increasing trend.

Table 1

| Scheduled bandwidth (scheduled bandwidth) | Number N of PTRS groups (number of PTRS groups) | Number M of samples per PTRS group (number of samples per PTRS group) |
| --- | --- | --- |
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 5 | 2 |
| $N_{RB3} \leq N_{RB} < N_{RB4}$ | 4 | 4 |
| $N_{RB4} \leq N_{RB}$ | 8 | 4 |

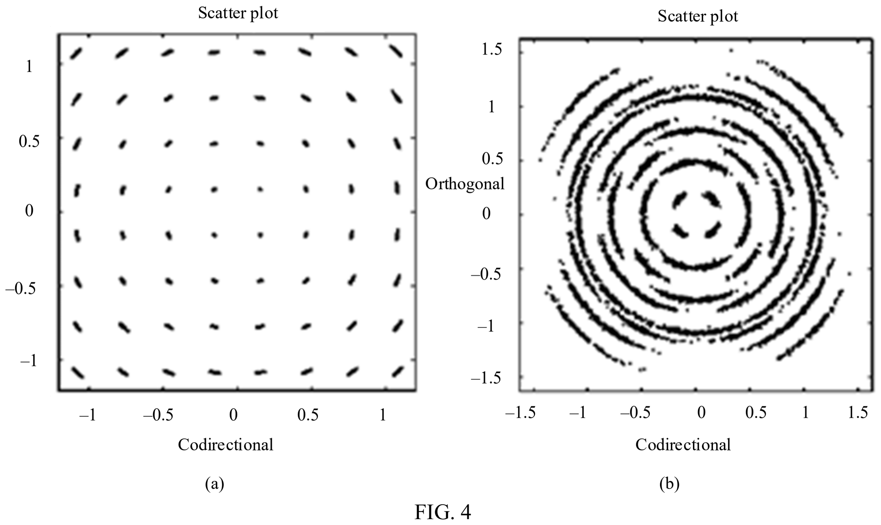

For example, as shown in (b) in FIG. 4, (b) in FIG. 4 is a received signal affected by a phase noise. In time domain, the phase noise is represented as a phase shift performed on standard constellation points in a scatter plot. A receive end may estimate, based on the received signal, a phase noise corresponding to a PTRS, to compensate for a phase error resulting from the phase noise, and obtain a phase-compensated received signal shown in (a) in FIG. 4, thereby improving communication performance of a communication system.

At present, a design scheme in which a PTRS is used for a DFT-s-OFDM waveform is as follows: The PTRS and data are mapped together to a time domain signal that is present before DFT is performed. In other words, the time domain signal that is present before DFT is performed is a mixed signal including the PTRS and the data. Further, a DFT operation may be performed on the time domain signal to which the PTRS and the data are mapped to obtain a frequency domain signal, and then subcarrier mapping and IFFT are performed on the frequency domain signal to obtain a DFT-s-OFDM time domain signal. However, in the PTRS design scheme, the PTRS is processed only in time domain, and a residual phase noise is not processed during frequency domain channel equalization. In a multi-user spatial multiplexing multi-stream or single-user multi-stream non-coherent crystal oscillator scenario, interference between a plurality of data streams affects time domain demodulation, and consequently processing performance of a receive end deteriorates.

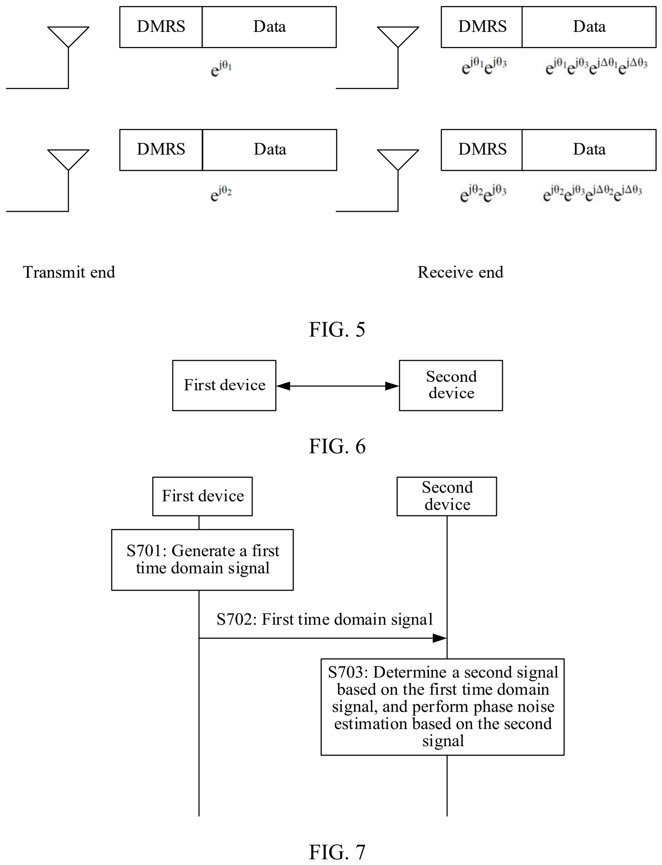

For example, as shown in FIG. 5, in a scenario in which a transmit end sends two signals, the two signals may be sent by different crystal oscillators of a same user, or may be sent by different users. Phase noises of the two signals sent by the transmit end are $e^{j\theta_1}$ and $e^{j\theta_2}$. Based on this, a receive end needs to use a two-stream receiver to receive the signals, and phase noises of the two signals received by the receive end are both $e^{j\theta_3}$ (this is a simplest case, and a more general case is that phase noises from non-coherent sources exist at the receive end, for example, the phase noises of the two signals received by the receive end are $e^{j\theta_3}$ and $e^{j\theta_4}$). However, because there is a transmission time interval between a demodulation reference signal (demodulation reference signal, DMRS) and a data signal, a phase noise deviation exists. On the received two signals, pilot signals and data signals retain residual phase noises of $e^{\Delta j\theta_1}e^{\Delta j\theta_3}$ and $e^{\Delta j\theta_2}e^{\Delta j\theta_3}$, respectively. In this case, the received signals of received data may be expressed as follows:

$$
\begin{bmatrix} Y(n_1) \\ Y(n_2) \end{bmatrix} = \begin{bmatrix} H_1(n_1)e^{j(\theta_3+\theta_1)}e^{j\Delta(\theta_3+\theta_1)} & H_2(n_1)e^{j(\theta_3+\theta_2)}e^{j\Delta(\theta_3+\theta_2)} \\ H_1(n_2)e^{j(\theta_3+\theta_1)}e^{j\Delta(\theta_3+\theta_1)} & H_2(n_2)e^{j(\theta_3+\theta_2)}e^{j\Delta(\theta_3+\theta_2)} \end{bmatrix} \begin{bmatrix} X_1(n_1) \\ X_2(n_2) \end{bmatrix}
$$

$$
= \begin{bmatrix} H_1(n_1)e^{j(\theta_3+\theta_1)} & H_2(n_1)e^{j(\theta_3+\theta_2)} \\ H_1(n_2)e^{j(\theta_3+\theta_1)} & H_2(n_2)e^{j(\theta_3+\theta_2)} \end{bmatrix} \begin{bmatrix} e^{j\Delta(\theta_3+\theta_1)} & 0 \\ 0 & e^{j\Delta(\theta_3+\theta_2)} \end{bmatrix} \begin{bmatrix} X_1(n_1) \\ X_2(n_2) \end{bmatrix}
$$

$$
= H_{est}\delta_i \begin{bmatrix} X_1(n_1) \\ X_2(n_2) \end{bmatrix},
$$

where

$Y(n_1)$ is a received first signal, $Y(n_2)$ is a received second signal, $X_1(n_1)$ is a sent first signal, $X_2(n_2)$ is a sent first signal, $H_{est}$ is a channel estimation response estimated at the DMRS (including phase noise impact at the DMRS), and $\delta_i$ is a residual phase noise matrix.

FIG. 5 shows an example of a phase noise situation between the two signals. It should be understood that in an actual communication scenario, phase noises at the receive end and the transmit end are more complex, and accordingly a residual phase noise matrix $\delta_i$ obtained by the receive end by receiving a plurality of signals is more complex. A quantity of signals is not specifically limited in embodiments of this application.

In the foregoing scenario, if the PTRS is placed according to an existing time domain placement scheme, phase noise estimation can be implemented only in time domain, a residual phase noise in frequency domain cannot be removed, and interference is also caused between a plurality of signals. For the receive end, a noise in frequency domain cannot be removed, that is, the residual phase noise term in the foregoing formula cannot be equivalently extracted. Consequently, data demodulation fails, and processing performance of the receive end deteriorates.

In view of this, an embodiment of this application provides a communication solution, to implement phase noise estimation in a multi-user spatial multiplexing multi-stream or single-user multi-stream non-coherent crystal oscillator scenario.

For example, FIG. 6 is a diagram of an architecture of a communication system according to an embodiment of this application. As shown in FIG. 6, the communication system includes a first device and a second device. When the first device is a transmit-end device, the second device is a receive-end device. When the first device is a receive-end device, the second device is a transmit-end device. In the following method embodiment, an example in which the first device is a transmit-end device and the second device is a receive-end device is used for description.

In this embodiment of this application, the first device and the second device may be network devices, may be terminal devices, or either the first device or the second device may be a network device and the other may be a terminal device. This is not specifically limited in embodiments of this application.

In this embodiment of this application, a plurality of antennas may be configured for each communication device, for example, the first device or the second device. The plurality of antennas may include at least one transmit antenna configured to send a signal and at least one receive antenna configured to receive a signal. In addition, each communication device additionally includes a transmitter chain and a receiver chain. A person of ordinary skill in the art can understand that both the transmitter chain and the receiver chain may include a plurality of components (for example, a processor, a modulator, a multiplexer, a demodulator, a demultiplexer, or an antenna) related to signal sending and receiving. Therefore, the first device may communicate with the second device by using a multiple-antenna technology.

In this embodiment of this application, a network device is a device that is located on a network side of the communication system and that has a communication function. Alternatively, a network device may be a chip/module including a communication function, for example, a system on a chip (system on a chip, SoC), or may be a dedicated chip/module, for example, a baseband chip. The network device includes but is not limited to: an access point (access point, AP) in a Wi-Fi system, for example, a home gateway, a router, a server, a switch, or a bridge, a base station in a cellular system (for example, a macro base station (Macro Site), a micro base station (Micro Site), a pico base station (Pico Site), a femto base station (Femto Site)), a radio network controller (radio network controller, RNC), a base station controller (base station controller, BSC), a base transceiver station (base transceiver station, BTS), a home NodeB (for example, a home evolved NodeB or a home NodeB, HNB), a baseband unit (baseband unit, BBU), a wireless relay node, a wireless backhaul node, a transmission point (transmission reception point, TRP, or transmission point, TP), or the like. Alternatively, the network device may be a gNB in 5G or a base station in a future communication standard (for example, 6G), a transmission point (TRP or TP), or a network device that further constitutes a base station or a transmission point, for example, a central unit (central unit, CU), a distributed unit (distributed unit, DU), a roadside unit (roadside unit, RSU) having a base station function, or a baseband unit (BBU).

In this embodiment of this application, a terminal device is a user terminal that accesses the communication system and that has a communication function. Alternatively, a terminal device may be a chip/module including a communication function, for example, an SoC, or may be a dedicated chip/module, for example, a baseband chip. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user equipment. The terminal device in this embodiment of this application may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may be alternatively a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement a method provided in this application.

It should be noted that a communication method provided in embodiments of this application is applicable to the first device and the second device shown in FIG. 6. For a specific implementation, refer to the following method embodiment. Details are not described herein.

It should be noted that, the solutions in embodiments of this application can also be applied to other communication systems, and corresponding names may be replaced with names corresponding to functions in the other communication systems.

With reference to FIG. 7 to FIG. 9, the following details the communication method provided in embodiments of this application.

For example, FIG. 7 is a schematic flowchart of a communication method according to an embodiment of this application. The communication method is applicable to the communication system shown in FIG. 6.

As shown in FIG. 7, the communication method includes the following steps.

S701: A first device generates a first time domain signal.

In this embodiment of this application, a first frequency domain signal corresponding to the first time domain signal is obtained by transforming a first signal at one or more first frequency domain positions on a second frequency domain signal into a second signal. The first frequency domain signal may be obtained by performing time-domain to frequency-domain transformation, subcarrier demapping, and other processing on the first time domain signal, that is, the first time domain signal is obtained by performing subcarrier mapping and frequency-domain to time-domain transformation, and other processing on the first frequency domain signal. In addition, the second frequency domain signal is obtained by performing time-domain to frequency-domain transformation on a second time domain signal, that is, the second time domain signal is obtained by performing frequency-domain to time-domain transformation on the second frequency domain signal, and the second time domain signal is a time domain data signal obtained by performing channel coding and other processing by the first device.

To be specific, the first device first performs time-domain to frequency-domain transformation on the second time domain signal to obtain the second frequency domain signal, transforms the first signal at the one or more first frequency domain positions on the second frequency domain signal into the second signal to obtain the first frequency domain signal, and then performs subcarrier mapping, frequency-domain to time-domain transformation, and other processing on the first frequency domain signal to obtain the first time domain signal. The time-domain to frequency-domain transformation processing may be implemented through DFT, the frequency-domain to time-domain transformation processing may be implemented through IFFT, and the first time domain signal may be, for example, a DFT-s-OFDM signal. Other processing steps may be inserted into the foregoing processing steps. Embodiments of this application are not strictly limited to the foregoing descriptions.

The first signal is a frequency domain data signal at a specific frequency domain position (the first frequency domain position) on the second frequency domain signal, the second signal is a frequency domain signal that is obtained by transforming the first signal at the specific frequency domain position, that is different from the first signal, and that is used for phase noise estimation, an amplitude of the second signal is determined based on an amplitude of the first signal, and a phase of the second signal is determined based on a phase of the first signal. It should be understood that first signals at different frequency domain positions may be different, and corresponding second signals obtained through transformation may also be different. Amplitudes and phases of second signals at various frequency domain positions need to be determined based on first signals at corresponding frequency domain positions.

The first frequency domain position may include one or more frequency domain resource units, one frequency domain resource unit is corresponding to one first signal, and one frequency domain resource unit may be one subcarrier.

When the first frequency domain position includes a plurality of frequency domain resource units, it may be considered that a first signal on each of several contiguous frequency domain resource units is transformed into one second signal. In this case, it may be considered that one first frequency domain position is corresponding to one second signal group, and the second signal on each frequency domain unit in the first frequency domain position satisfies the foregoing relationship.

In a possible design scheme, the first frequency domain position may be preconfigured, or may be obtained by the first device and a second device through negotiation. This is not specifically limited in embodiments of this application.

In another possible design scheme, the first frequency domain position may be indicated by the first device to a second device. In other words, the first device may locally configure the frequency domain position specified for the second signal and then indicate the frequency domain position to the second device. For example, the first device sends first indication information to the second device. Correspondingly, the second device receives the first indication information from the first device. The first indication information indicates the first frequency domain position. Optionally, the first indication information may be carried in RRC signaling, MAC-CE signaling, or other signaling for sending. This is not specifically limited in embodiments of this application.

In a possible design scheme, the first device may equally space the second signals in frequency domain on the second frequency domain signal. In other words, the plurality of first frequency domain positions are equally spaced in frequency domain.

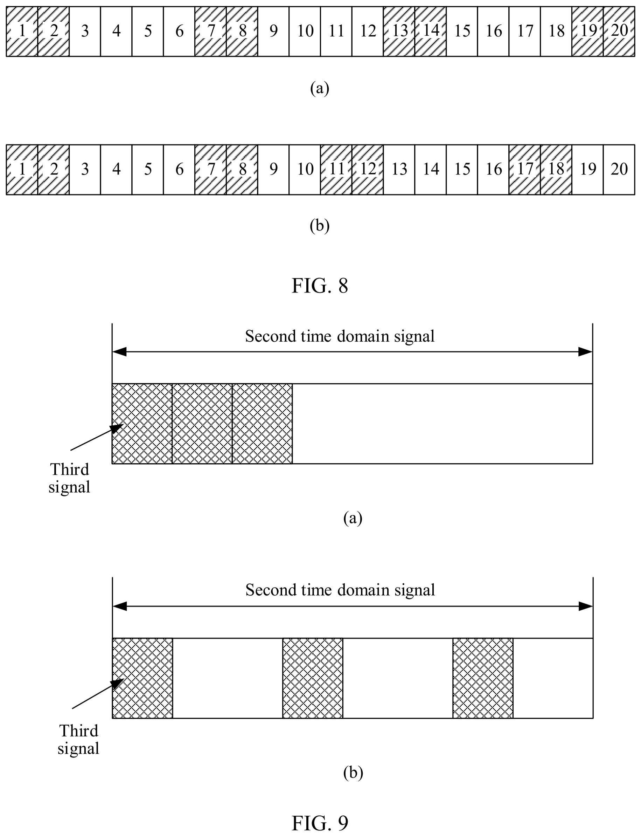

In this scenario, in a possible design scheme, the second signals are placed at an interval of X frequency domain resource units on the second frequency domain signal, where Y is a positive integer. For example, as shown in (a) in FIG. 8, frequency domain resources (scheduled resources) used by the second frequency domain signal include 20 subcarriers. The 20 subcarriers are numbered from 0 to 19 or the 20 subcarriers are numbered from 1 to 20 sequentially, and X=4. A first frequency domain position includes two subcarriers, that is, two second signals are placed at an interval of four subcarriers. Numbers 1 to 20 are used as an example. A subcarrier whose sequence number is is set as a start frequency domain position of the second signals, and the plurality of first frequency domain positions are frequency domain positions corresponding to subcarriers 1 and 2, frequency domain positions corresponding to subcarriers 7 and 8, frequency domain positions corresponding to subcarriers 13 and 14, and frequency domain positions corresponding to subcarriers 19 and 20. In this case, the first device transforms first signals on the subcarriers 1, 2, 7, 8, 13, 14, 19, and 20 into second signals.

In another possible design scheme, the second signals are placed at an interval of X frequency domain resource units in every Y frequency domain resource units on the second frequency domain signal, where X and Y are positive integers.

For example, as shown in (b) in FIG. 8, frequency domain resources (scheduled resources) used by the second frequency domain signal include 20 subcarriers. The 20 subcarriers are numbered from 1 to 20 sequentially, Y=10, and X=4. A first frequency domain position includes two subcarriers, that is, two subcarriers are set at an interval of four subcarriers in every 10 subcarriers. The plurality of first frequency domain positions are frequency domain positions corresponding to subcarriers 1 and 2, frequency domain positions corresponding to subcarriers 7 and 8, frequency domain positions corresponding to subcarriers 11 and 12, and frequency domain positions corresponding to subcarriers 17 and 18. In this case, the first device transforms first signals on the subcarriers 1, 2, 7, 8, 11, 12, 17, and 18 into second signals.

It should be understood that a quantity of first frequency domain positions specified for the second signal is related to a scheduled bandwidth, a frequency domain spacing, and a start frequency domain resource unit. The start frequency domain resource unit may be a 1st frequency domain resource unit in the scheduled bandwidth, for example, the subcarrier 1. Alternatively, the 1st frequency domain resource unit in the scheduled bandwidth may not be used as the start frequency domain resource unit, for example, a subcarrier 3 is used as the start frequency domain resource unit.

In a possible design scheme, the second signal in this embodiment of this application may satisfy the following relationship: $X(n) = Ae^{j\theta}$, n is a sequence number of a frequency domain resource unit on which the second signal is located, $X(n)$ is the second signal on the $n^{th}$ frequency domain resource unit, A is the amplitude of the second signal, and $\theta$ is the phase of the second signal.

In this embodiment of this application, the amplitude of the second signal may be determined from a first amplitude set based on the amplitude of the first signal.

In this scenario, in a possible design scheme, the first amplitude set may be a preconfigured or predefined set including all possible amplitudes. For example, the first amplitude set may be $\{0.5, 1, 1.5, \sqrt{2}, \sqrt{10}, \sqrt{42}, \sqrt{170}, \sqrt{648}\}$.

Based on this, the first device may select, as the amplitude of the second signal from the first amplitude set, a candidate amplitude that is closest to the amplitude of the first signal at the first frequency domain position. For example, the second signals are set as shown in (a) in FIG. 8, and a first signal on the subcarrier 1 is $1.6e^{j\frac{\pi}{7}}$. In this case, the first device may select, from the first amplitude set, 1.5 as an amplitude of a second signal on the subcarrier 1.

In another possible design scheme, the first amplitude set may be alternatively a candidate amplitude set determined from a plurality of preconfigured or predefined candidate amplitude sets, and the plurality of candidate amplitude sets may be obtained by combining all possible amplitudes. For example, as listed in the following Table 2, one candidate amplitude set is corresponding to one index value, each candidate amplitude set has at least one candidate amplitude, and different candidate amplitude sets are corresponding to different candidate amplitude combinations. Candidate amplitude sets in the following Table 2 is obtained by combining candidate amplitudes 0.5, 1, $\sqrt{2}$, 1.5, $\sqrt{10}$, $\sqrt{42}$, $\sqrt{170}$, and $\sqrt{648}$. For example, an index is corresponding to a candidate amplitude set {1}, an index 2 is corresponding to a candidate amplitude set {1.5}, an index 3 is corresponding to a candidate amplitude set {0.5}, and an index 4 is corresponding to a candidate amplitude set $\{1, \sqrt{2}, \sqrt{10}, \sqrt{42}, \sqrt{170}, \sqrt{648}\}$. Different candidate amplitude sets may be corresponding to different index values.

Table 2

| Index | Candidate amplitude set |
|---|---|
| 1 | {1} |
| 2 | {1.5} |
| 3 | {0.5} |
| 4 | $\{1, \sqrt{2}, \sqrt{10}, \sqrt{42}, \sqrt{170}, \sqrt{648}\}$ |

For example, the candidate amplitudes in the candidate amplitude sets are determined based on amplitudes corresponding to outermost constellation points in standard constellation points. The foregoing Table 2 shows an example of several candidate amplitude sets including candidate amplitudes. The candidate amplitude sets may be configured based on different communication environments and transmission requirements. This is not specifically limited in embodiments of this application.

Based on this, the first device may select, from the plurality of candidate amplitude sets, a candidate amplitude set as the first amplitude set based on a current communication environment (that is, a communication condition between the first device and the second device, for example, a signal-to-noise ratio (signal to interference plus noise ratio, SINR)) and the amplitude of the first signal. For example, in a scenario with a high SINR, the first device has a low requirement on an amplitude of a sent signal. In this case, the first device may select a candidate amplitude set including a large quantity of candidate amplitudes as the first amplitude set, and then select, as the amplitude of the second signal from the first amplitude set, a candidate amplitude that is closest to the amplitude of the first signal. For example, if the first amplitude set is $\{1, \sqrt{2}, \sqrt{10}, \sqrt{42}, \sqrt{170}, \sqrt{648}\}$, and the first signal on the subcarrier 1 is $1.6e^{j\frac{\pi}{7}}$, the first device may select $\sqrt{2}$ as the amplitude of the second signal on the subcarrier 1. Alternatively, in a scenario with a high SINR, the first device selects, as the first amplitude set, a candidate amplitude set that includes only one candidate amplitude and that is closest to the amplitude of the first signal. For example, if the first signal on the subcarrier 1 is $1.6e^{j\frac{\pi}{7}}$, the first amplitude set is {1.5}. Correspondingly, in a scenario with a low SINR, the first device has a high requirement on an amplitude of a sent signal, and the first device may select a candidate amplitude set including a large candidate amplitude as the first amplitude set.

In this scenario, the first device may indicate an index of the first amplitude set in the plurality of candidate amplitude sets, so that the second device determines the first amplitude set. For example, the first device sends second indication information to the second device. Correspondingly, the second device receives the second indication information from the first device. The second indication information indicates the first amplitude set. Optionally, the second indication information may be carried in RRC signaling, MAC-CE signaling, or other signaling for sending. This is not specifically limited in embodiments of this application.

In another possible design scheme, in a scenario in which the amplitude (energy) of the first signal is large enough, the first device may use the amplitude of the first signal as the amplitude of the second signal. In other words, the first device may not change the amplitude of the first signal, and change only the phase of the first signal to obtain the second signal.

For example, when the amplitude of the first signal is greater than or equal to a first amplitude threshold, the amplitude of the second signal is the amplitude of the first signal; or when the amplitude of the first signal is less than the first amplitude threshold, the amplitude of the second signal is one amplitude in a first amplitude set. For example, the second signals are set as shown in (a) in FIG. 8, the first amplitude threshold is 2, and the first signal on the subcarrier 1 is $1.6e^{j\frac{\pi}{7}}$. In this case, the first device may select a candidate amplitude from the first amplitude set as the amplitude of the second signal on the subcarrier according to related descriptions in the foregoing design scheme. Details are not described herein again. For example, the amplitude of the second signal on the subcarrier 1 is 1.5. If a first signal on a subcarrier 7 is $2.1e^{j\frac{\pi}{7}}$,

and an amplitude of the first signal on the subcarrier 7 is greater than 2, an amplitude of the second signal on the subcarrier 7 is 2.

Alternatively, for example, when the amplitude of the first signal is greater than a first amplitude threshold, the amplitude of the second signal is the amplitude of the first signal; or when the amplitude of the first signal is less than or equal to the first amplitude threshold, the amplitude of the second signal is one amplitude in a first amplitude set. A difference from the foregoing example lies in that, when the amplitude of the first signal is equal to the first amplitude threshold, the amplitude of the second signal is one amplitude in the first amplitude set. For a specific implementation process, refer to related descriptions in the foregoing example. Details are not described herein again.

In addition, in this embodiment of this application, the phase of the second signal may be determined from a candidate phase set based on the phase of the first signal, and the candidate phase set may be preconfigured or predefined. For example, the candidate phase set may be $\{0, \pm\frac{\pi}{2}, \pm\frac{\pi}{4}, \pm\frac{\pi}{8}, \pm\frac{3\pi}{8}, \pm\frac{5\pi}{8}, \pm\frac{\pi}{16}, \pm\frac{3\pi}{16}, \pm\frac{5\pi}{16}, \pm\frac{7\pi}{16}, \pm\frac{9\pi}{16}\}$, or $\{\pm\pi,$

$\pm\left(\pi + \frac{\pi}{2}\right), \pm\left(\pi + \frac{\pi}{4}\right), \pm\left(\pi + \frac{\pi}{8}\right), \pm\left(\pi + \frac{3\pi}{8}\right), \pm\left(\pi + \frac{5\pi}{8}\right), \pm\left(\pi + \frac{\pi}{16}\right), \pm\left(\pi + \frac{3\pi}{16}\right), \pm\left(\pi + \frac{5\pi}{16}\right), \pm\left(\pi + \frac{7\pi}{16}\right), \pm\left(\pi + \frac{9\pi}{16}\right)\}$.

In this case, the first device may select, as the phase of the second signal from the candidate phase set, a candidate phase that has a small difference from the phase of the first signal. For example, the second signals are set as shown in (a) in FIG. 8, the first amplitude threshold is 2, and the first signal on the subcarrier 1 is $1.6e^{j\frac{\pi}{7}}$. In this case, the first device may select $\frac{\pi}{8}$ as a phase of the first signal on the subcarrier 1.

It should be noted that a representation form of the second signal is not limited in embodiments of this application. For example, a relational expression that the second signal satisfies may be alternatively represented as $X(n) = Ae^{j2\pi b}$, where b is a radian value of the second signal. In this case, when determining the phase of the second signal, the first device may select a radian value to determine the phase. To be specific, a candidate radian value may be determined from a candidate radian set based on the phase of the first signal, as the radian value of the second signal, so that a phase obtained by using the candidate radian value is the same as the phase of the first signal. The candidate radian set may be preconfigured or predefined. For example, the candidate radian set may be a set including some or all optional values selected from $\{0, \pm\frac{1}{2}, \pm\frac{1}{4}, \pm\frac{3}{4}, \pm\frac{1}{8}, \pm\frac{3}{8}, \pm\frac{5}{8}, \pm\frac{7}{8}, \pm\frac{1}{16}, \pm\frac{3}{16}, \pm\frac{5}{16}, \pm\frac{7}{16}, \pm\frac{9}{16}, \pm\frac{11}{16}, \pm\frac{13}{16}, \pm\frac{15}{16}\}$. For example, the preconfigured or predefined candidate radian set may be $\{\pm\frac{1}{2}\}$, $\{\pm\frac{1}{4}, \pm\frac{3}{4}\}$, $\{\pm\frac{1}{8}, \pm\frac{3}{8}, \pm\frac{5}{8}, \pm\frac{7}{8}\}$, or $\{\pm\frac{1}{16}, \pm\frac{3}{16}, \pm\frac{5}{16}, \pm\frac{7}{16}, \pm\frac{9}{16}, \pm\frac{11}{16}, \pm\frac{13}{16}, \pm\frac{15}{16}\}$. It should be understood that, when the candidate radian set is determined, the candidate phase set for the second signal is determined.

Further, the first device performs subcarrier mapping, frequency-domain to time-domain transformation, and other processing on the first frequency domain signal including the second signal, to obtain the first time domain signal. It should be understood that, in addition to performing subcarrier mapping and frequency-domain to time-domain transformation processing on the first frequency domain signal, the first device may further perform CP addition, DAC processing, and other processing to obtain the first time domain signal.

It should be understood that in this embodiment of this application, it may be considered that the second signal is obtained by performing signal superimposition on the first signal at the first frequency domain position on the second frequency domain signal, and the superimposed signal may be one or more types of noise signals. Alternatively, it may be considered that the first signal at the first frequency domain position on the second frequency domain signal is replaced with the second signal, and the second signal includes the first signal and a superimposed signal. For example, the superimposed signal is a noise signal that is manually added, and is used to represent an interference signal at a transmit end. In this case, the second signal is a mixed frequency domain signal including a noise signal and a frequency domain data signal. For example, the second signal on the $n^{th}$ frequency domain resource unit may be represented as $X(n)=Data\_f(n) + a(n)$, where $Data\_f(n)$ is a first signal on the $n^{th}$ frequency domain resource unit, and $a(n)$ is a noise signal.

In addition, in this embodiment of this application, selection of the amplitude and the phase of the second signal satisfies the following two constraints: First, a noise signal in the second signal needs to be minimized, so that a PAPR loss and a block error rate (block error rate, BLER) loss are minimized. Second, inaccurate phase noise estimation caused by excessively low frequency domain energy of the second signal needs to be avoided.

In a possible design scheme, the second time domain signal in this embodiment of this application may include one or more third signals, and the third signal may be a time domain signal having low PAPR impact, like a ZC (Zadoff-Chu) sequence, a $\pi/2$-BPSK signal, or a replicated data signal. Based on this, the third signal may be used to eliminate a noise signal caused by the second signal, to avoid a problem that a performance loss of a sent signal is excessively large because of the noise signal caused by the second signal in a case of higher-order modulation and a high code rate.

A process of setting the second signal based on the second time domain signal provided with the third signal is similar to the foregoing process. Details are not described herein again. In a scenario in which the second signals are equally spaced in frequency domain, noise signals $a(n)$ in the second signals are also equally spaced in frequency domain. In this case, the noise signals equally spaced in frequency domain are repeated in time domain. Therefore, the second device may estimate time domain interference based on the known third signal, and then perform cancellation processing on the interference at data, so that a loss caused by frequency domain interference to data demodulation can be reduced.

A quantity of third signals may be determined based on a length of the second time domain signal and a quantity of second signals. It should be noted that, regardless of a quantity of frequency domain resource units included in the first frequency domain position, it is considered that one first frequency domain position is corresponding to one second signal. In other words, the quantity of third signals may be determined based on the length of the second time domain signal and a quantity of first frequency domain positions. For example, the quantity of third signals is equal to a first quantity, or the quantity of third signals is an integer multiple of the first quantity, and the first quantity is obtained by rounding up or down a value that is obtained by dividing the length of the second time domain signal by the quantity of second signals. For example, the first quantity is $S = \left\lceil \frac{T}{k} \right\rceil$ or $\left\lfloor \frac{T}{k} \right\rfloor$, where T is the length of the second time domain signal. In this case, the quantity of third signals may be S, or may be an integer multiple of S.

In this embodiment of this application, the plurality of third signals may be placed consecutively or at intervals on the second time domain signal. For example, S=3. As shown in (a) in FIG. 9, the three third signals are placed consecutively on the second time domain signal. As shown in (b) in FIG. 9, the three third signals are placed at intervals on the second time domain signal. Placement at intervals may be equally spaced placement or unequally spaced placement.

In addition, in a transmission scenario with multiple antenna ports, different antenna ports separately send first time domain signals to different devices. To be specific, one antenna port is corresponding to one first time domain signal, and different antenna ports may multiplex a same time-frequency resource to send first time domain signals.

In a possible design scheme, second signals corresponding to antenna ports are at different first frequency domain positions. To be specific, second signals that are set on first frequency domain signals corresponding to first time domain signals sent by the antenna ports are at different frequency domain positions

In another possible design scheme, second signals corresponding to antenna ports may be at a same first frequency domain position, but only one second signal is not 0 in second signals that are corresponding to a plurality of antenna ports and that are at a same frequency domain position.

In another possible design scheme, second signals corresponding to antenna ports may be at a same first frequency domain position, but a plurality of antenna ports use different orthogonal cover codes (orthogonal cover codes, OCCs) at a same frequency domain position.

In summary, signals need to be kept orthogonal to each other between a plurality of antenna ports.

For example, the first device has two antenna ports (an antenna port 1 and an antenna port 2). The antenna port and the antenna port 2 multiplex frequency domain resources of 20 subcarriers, and first frequency domain signals corresponding to the antenna port 1 and the antenna port 2 are both provided with second signals on a subcarrier 1, a subcarrier 6, a subcarrier 11, and a subcarrier 16. For the antenna port 1, if values of second signals that are set by the first device on the subcarrier 1 and the subcarrier 11 are not 0, for the antenna port 2, the first device sets values of second signals that are set on the subcarrier and the subcarrier 11 to 0. Correspondingly, for the antenna port 1, if values of second signals that are set by the first device on the subcarrier 6 and the subcarrier 16 are 0, for the antenna port 2, the network device sets values of second signals that are set on the subcarrier 6 and the subcarrier 16 to non-zero. In other words, for different antenna ports that multiplex resources, values of second signals that are set at a same frequency domain position cannot be non-zero at the same time. To be specific, for second signals that are corresponding to a plurality of antenna ports and that are at a same frequency domain position, if a first signal at the frequency domain position is correspondingly set to non-zero for one antenna port, values of second signals that are set at the same frequency domain position need to be set to 0 for other antenna ports.

S702: The first device sends the first time domain signal to the second device. Correspondingly, the second device receives the first time domain signal from the first device.

For example, the first time domain signal may be sent through a radio channel in an RF manner.

S703: The second device determines the second signal based on the first time domain signal, and performs phase noise estimation based on the second signal.

For example, after receiving the first time domain signal, the second device may perform time-domain to frequency-domain transformation, subcarrier demapping, and other processing on the first time domain signal to obtain the first frequency domain signal, and obtain a frequency domain signal at a specific frequency domain position (the first frequency domain position) through parsing. Because there is a difference between a sent signal and a received signal, the second device determines, from the candidate amplitude set based on an amplitude of the frequency domain signal obtained through parsing at the specific frequency domain position, a candidate amplitude closest to the amplitude of the frequency domain signal, to obtain the amplitude of the second signal at the specific frequency domain position; and determines, from the candidate phase set based on a phase of the frequency domain signal obtained through parsing at the specific frequency domain position, a candidate phase closest to the phase of the frequency domain signal, to obtain the phase of the second signal at the specific frequency domain position. In this way, a value of the second signal at the specific frequency domain position on the first frequency domain signal is determined, so that the second signal is used to perform phase noise estimation. In this embodiment of this application, for an implementation process in which the second device performs phase noise estimation by using the second signal, refer to related descriptions in an existing implementation. Details are not described herein. Further, the second device may obtain the second time domain signal by performing frequency-domain to time-domain transformation processing on a frequency domain signal obtained through frequency domain equalization and phase noise processing, to perform subsequent processing such as demodulation to obtain data information.

According to the communication method shown in FIG. 7, the first device transforms the first signal at the specific frequency domain position on the second frequency domain signal into the second signal an invariable amplitude and phase, so that the second device can perform phase noise estimation in frequency domain by using the second signal. This can resolve a problem that a phase noise cannot be processed because of frequency domain channel equalization in a phase noise estimation process performed by using an existing PTRS scheme in time domain, thereby implementing phase noise estimation in a multi-user spatial multiplexing multi-stream or single-user multi-stream non-coherent crystal oscillator scenario.

It can be understood that, in the foregoing embodiments, the method and/or steps implemented by the first device may be alternatively implemented by a component (for example, a processor, a chip, a chip system, a circuit, a logical module, or software) that may be used in the first device, and the method and/or steps implemented by the second device may be alternatively implemented by a component (for example, a processor, a chip, a chip system, a circuit, a logical module, or software) that may be used in the second device.

The foregoing mainly describes the solutions provided in this application. Correspondingly, this application further provides a communication apparatus. The communication apparatus is configured to implement the method in the foregoing method embodiment. The communication apparatus may be the first device in the foregoing method embodiment, an apparatus including the first device, or a component that may be used in the first device, for example, a chip or a chip system. Alternatively, the communication apparatus may be the second device in the foregoing method embodiment, an apparatus including the second device, or a component that may be used in the second device, for example, a chip or a chip system.

It can be understood that, to implement the foregoing functions, the communication apparatus includes a corresponding hardware structure and/or software module for performing the functions. A person skill in the art should be easily aware that, with reference to the examples described in embodiments disclosed in this specification, units and algorithm steps can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the communication apparatus may be obtained through division based on the foregoing method embodiment. For example, functional modules may be obtained through division in correspondence to functions, or at least two functions may be integrated into one processing module. The integrated module may be implemented in a form of hardware, or may be implemented in a form of a software functional module. It should be noted that division into modules in embodiments of this application is an example, is merely logical function division, and may be other division during actual implementation.

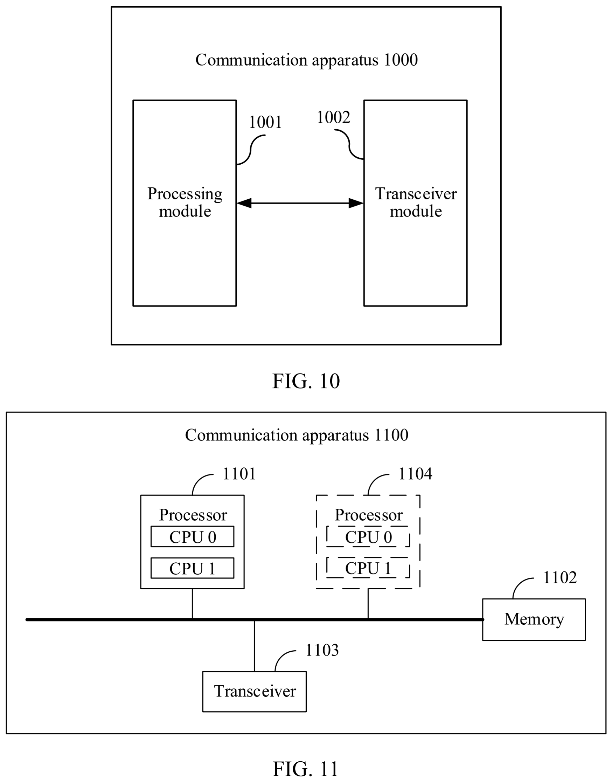

For example, the communication apparatus is the terminal device or the network device in the foregoing method embodiment. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the first device or the second device in the foregoing method embodiment. The transceiver module 1002 is configured to perform sending and receiving functions of the first device or the second device in the foregoing method embodiment.

All related content of the steps in the foregoing method embodiment may be cited in function descriptions of the corresponding functional modules. Details are not described herein again.

The communication apparatus 1000 provided in this embodiment may perform the foregoing method. Therefore, for technical effects that can be achieved by the communication apparatus 1000, refer to the foregoing method embodiment. Details are not described herein again.

In a possible design scheme, in this embodiment of this application, the transceiver module 1002 may include a receiving module and a sending module (not shown in FIG. 10). The transceiver module is configured to implement a sending function and a receiving function of the communication apparatus 1000.

In a possible design scheme, the communication apparatus 1000 may further include a storage module (not shown in FIG. 10), and the storage module stores a program or instructions. When the processing module 1001 executes the program or instructions, the communication apparatus 1000 is enabled to perform functions of the first device or the second device in the method shown in FIG. 7.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

For example, FIG. 11 is a diagram of a structure of another communication apparatus according to an embodiment of this application. The communication apparatus may be a first device or a second device, or may be a chip (system) or another component or part that may be disposed in the first device or the second device. As shown in FIG. 11, the communication apparatus 1100 may include a processor 1101. Optionally, the communication apparatus 1100 may further include a memory 1102 and/or a transceiver 1103. The processor 1101, the memory 1102, and the transceiver 1103 are coupled to each other, for example, may be connected to each other through a communication bus.

The following specifically describes the components of the communication apparatus 1100 with reference to FIG. 11.

The processor 1101 is a control center of the communication apparatus 1100, and may be a processor or may be a generic term of a plurality of processing elements. For example, the processor 1101 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 1101 may perform various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiment. Details are not described herein again.

Optionally, the memory 1102 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible to a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in embodiments of this application.

The transceiver 1103 is configured to communicate with another communication apparatus. For example, the communication apparatus 1100 is a terminal device, and the transceiver 1103 may be configured to communicate with a network device or communicate with another terminal device. For another example, the communication apparatus 1100 is a network device, and the transceiver 1103 may be configured to communicate with a terminal device or communicate with another network device.

Optionally, the transceiver 1103 may include a receiver and a transmitter (which are not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through the interface circuit (not shown in FIG. 11) of the communication apparatus 1100. This is not specifically limited in embodiments of this application.

It should be noted that the structure of the communication apparatus 1100 shown in FIG. 11 does not constitute any limitation on the communication apparatus. An actual communication apparatus may include more or fewer components than those shown in the figure, a combination of some components, or a different arrangement of the components.

In addition, for technical effects of the communication apparatus 1100, refer to the technical effects of the communication method in the foregoing method embodiment. Details are not described herein again.

An embodiment of this application further provides a computer-readable storage medium. The computer-readable storage medium stores a computer program or instructions. When the computer program or instructions are executed by a computer, functions in the foregoing method embodiment are implemented.

An embodiment of this application further provides a computer program product. When the computer program product is executed by a computer, functions in the foregoing method embodiment are implemented.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the system, apparatuses, and units described above, refer to the corresponding processes in the foregoing method embodiment. Details are not described herein again.

In the several embodiments provided in this application, it should be understood that the disclosed system, apparatuses, and method may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

Although this application is described herein with reference to embodiments, in a process of implementing this application that claims protection, a person skilled in the art can understand and implement other variations of the disclosed embodiments by viewing the accompanying drawings, the disclosed content, and the appended claims. In the claims, the term "comprising" (comprising) does not exclude other components or steps, and "a" or "an" does not exclude "a plurality of". A single processor or another unit may implement several functions enumerated in the claims. Some measures are recorded in dependent claims different from each other, but this does not mean that these measures cannot be combined to produce great effect.

**Claims**

1. A communication method, wherein the method comprises:

    generating a first time domain signal, wherein a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal; and
    sending the first time domain signal.

2. The method according to claim 1, wherein that the amplitude of the second signal is determined based on the amplitude of the first signal comprises:
    the amplitude of the second signal is determined from a first amplitude set based on the amplitude of the first signal.

3. The method according to claim 1, wherein that the amplitude of the second signal is determined based on the amplitude of the first signal comprises:

    when the amplitude of the first signal is greater than or equal to a first amplitude threshold, the amplitude of the second signal is the amplitude of the first signal; or
    when the amplitude of the first signal is less than the first amplitude threshold, the amplitude of the second signal is one amplitude in a first amplitude set.

4. The method according to claim 1, wherein that the amplitude of the second signal is determined based on the amplitude of the first signal comprises:

    when the amplitude of the first signal is greater than a first amplitude threshold, the amplitude of the second signal is the amplitude of the first signal; or
    when the amplitude of the first signal is less than or equal to the first amplitude threshold, the amplitude of the second signal is one amplitude in a first amplitude set.

5. The method according to any one of claims 2 to 4, wherein the first amplitude set is determined from a plurality of candidate amplitude sets.

6. The method according to claim 5, wherein the method further comprises:
    sending first indication information, wherein the first indication information indicates the first amplitude set.

7. The method according to any one of claims 1 to 6, wherein the method further comprises:
    sending second indication information, wherein the second indication information indicates the first frequency domain position.

8. A communication method, wherein the method comprises:

    receiving a first time domain signal, wherein a first frequency domain signal corresponding to the first time domain signal is obtained by transforming a first signal at one or more first frequency domain positions on a second frequency domain signal into a second signal, the second signal is used for phase noise estimation, an amplitude of the second signal is determined based on an amplitude of the first signal, and a phase of the second signal is determined based on a phase of the first signal; and
    determining the second signal based on the first time domain signal, and performing phase noise estimation based on the second signal.

9. The method according to claim 8, wherein that the amplitude of the second signal is determined based on the amplitude of the first signal comprises:
the amplitude of the second signal is determined from a first amplitude set based on the amplitude of the first signal.

10. The method according to claim 8, wherein that the amplitude of the second signal is determined based on the amplitude of the first signal comprises:

   when the amplitude of the first signal is greater than or equal to a first amplitude threshold, the amplitude of the second signal is the amplitude of the first signal; or
   when the amplitude of the first signal is less than the first amplitude threshold, the amplitude of the second signal is one amplitude in a first amplitude set.

11. The method according to claim 8, wherein that the amplitude of the second signal is determined based on the amplitude of the first signal comprises:

   when the amplitude of the first signal is greater than a first amplitude threshold, the amplitude of the second signal is the amplitude of the first signal; or
   when the amplitude of the first signal is less than or equal to the first amplitude threshold, the amplitude of the second signal is one amplitude in a first amplitude set.

12. The method according to any one of claims 9 to 11, wherein the first amplitude set is determined from a plurality of candidate amplitude sets.

13. The method according to claim 12, wherein the method further comprises:
sending first indication information, wherein the first indication information indicates the first amplitude set.

14. The method according to any one of claims 8 to 13, wherein the method further comprises:
receiving second indication information, wherein the second indication information indicates the first frequency domain position.

15. The method according to any one of claims 1 to 14, wherein the second signal satisfies the following relationship: $X(n) = Ae^{j\theta}$, n is a sequence number of a frequency domain resource unit on which the second signal is located, $X(n)$ is the second signal on the $n^{th}$ frequency domain resource unit, A is the amplitude of the second signal, and $\theta$ is the phase of the second signal.

16. The method according to claims 1 to 15, wherein the first frequency domain position comprises one or more frequency domain resource units.

17. The method according to any one of claims 1 to 16, wherein that the phase of the second signal is determined based on the phase of the first signal comprises:
the phase of the second signal is determined from a candidate phase set based on the phase of the first signal.

18. The method according to any one of claims 1 to 17, wherein the first time domain signal is obtained by performing subcarrier mapping and time-domain to frequency-domain transformation on the first frequency domain signal.

19. The method according to any one of claims 1 to 18, wherein the second frequency domain signal is obtained by performing time-domain to frequency-domain transformation on a second time domain signal, the second time domain signal comprises one or more third signals, and a quantity of third signals is determined based on a length of the second time domain signal and a quantity of second signals.

20. The method according to claim 19, wherein that the quantity of third signals is determined based on the length of the second time domain signal and the quantity of second signals comprises: the quantity of third signals is equal to a first quantity, or the quantity of third signals is an integer multiple of the first quantity, and the first quantity is obtained by rounding up or down a value that is obtained by dividing the length of the second time domain signal by the quantity of second signals.

21. The method according to claim 19 or 20, wherein the plurality of third signals are placed consecutively or at intervals on the second time domain signal.

22. The method according to any one of claims 1 to 21, wherein the second signals are equally spaced in frequency domain on the second frequency domain signal.

23. The method according to claim 22, wherein that the second signals are equally spaced in frequency domain on the second frequency domain signal comprises: the second signals are placed at an interval of X frequency domain resource units on the second frequency domain signal, or the second signals are placed at an interval of X frequency domain resource units in every Y frequency domain resource units on the second frequency domain signal, wherein X and Y are positive integers.

24. The method according to any one of claims 1 to 23, wherein there are a plurality of first time domain signals, and each first time domain signal is corresponding to one antenna port.

25. The method according to claim 24, wherein second signals corresponding to antenna ports are at different first frequency domain positions.

26. The method according to claim 24, wherein only one second signal is not 0 in second signals that are corresponding to a plurality of antenna ports and that are at a same frequency domain position.

27. A communication apparatus, wherein the communication apparatus comprises a processing module and a transceiver module;

    the processing module is configured to perform a processing function in the method according to any one of claims 1 to 26; and
    the transceiver module is configured to perform sending and receiving functions in the method according to any one of claims 1 to 26.

28. A communication apparatus, comprising a processor, wherein the processor is coupled to a memory; and
    the processor is configured to execute a computer program stored in the memory, so that the communication apparatus performs the method according to any one of claims 1 to 26.

29. A computer-readable storage medium, wherein the computer-readable storage medium stores a computer program or instructions, and when the computer program or instructions are run on a computer, the computer is enabled to perform the method according to any one of claims 1 to 26.

30. A computer program product, wherein the computer program product comprises a computer program or instructions, and when the computer program or instructions are run on a computer, the computer is enabled to perform the method according to any one of claims 1 to 26.

FIG. 1

(a)

(b)

FIG. 2

(a)

(b)

FIG. 3

FIG. 4

| DMRS | Data |
|------|------|

$e^{j\theta_1}$

| DMRS | Data |
|------|------|

$e^{j\theta_1}e^{j\theta_3}$     $e^{j\theta_1}e^{j\theta_3}e^{j\Delta\theta_1}e^{j\Delta\theta_3}$

| DMRS | Data |
|------|------|

$e^{j\theta_2}$

| DMRS | Data |
|------|------|

$e^{j\theta_2}e^{j\theta_3}$     $e^{j\theta_2}e^{j\theta_3}e^{j\Delta\theta_2}e^{j\Delta\theta_3}$

Transmit end                        Receive end

## FIG. 5

| First device | ◄──────► | Second device |
|---|---|---|

## FIG. 6

```
  First device              Second
                            device
       |                       |
 ┌─────────────┐              |
 │ S701: Generate a first     |
 │ time domain signal         |
 └─────────────┘              |
       |   S702: First time domain signal   |
       |──────────────────────►|
       |                  ┌──────────────────────┐
       |                  │ S703: Determine a second signal
       |                  │ based on the first time domain
       |                  │ signal, and perform phase noise
       |                  │ estimation based on the second
       |                  │ signal
       |                  └──────────────────────┘
       |                       |
```

## FIG. 7

| 1 | 2 | 3 | 4 | 5 | 6 | 7 | 8 | 9 | 10 | 11 | 12 | 13 | 14 | 15 | 16 | 17 | 18 | 19 | 20 |

(a)

| 1 | 2 | 3 | 4 | 5 | 6 | 7 | 8 | 9 | 10 | 11 | 12 | 13 | 14 | 15 | 16 | 17 | 18 | 19 | 20 |

(b)

FIG. 8

Second time domain signal

Third
signal

(a)

Second time domain signal

Third
signal

(b)

FIG. 9

Communication apparatus 1000

Processing
module
1001

1002
Transceiver
module

FIG. 10

Communication apparatus 1100

1101
Processor
CPU 0
CPU 1

1104
Processor
CPU 0
CPU 1

1102
Memory

1103
Transceiver

FIG. 11

## INTERNATIONAL SEARCH REPORT

| International application No. |
| --- |
| **PCT/CN2023/083908** |

**A. CLASSIFICATION OF SUBJECT MATTER**

H04L25/03(2006.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 时域, 频域, 相位, 噪声, 相噪, 估计, 幅值, 幅度, 相位跟踪参考信号, time domain, frequency domain, phase, noise, amplitude, PTRS

**C. DOCUMENTS CONSIDERED TO BE RELEVANT**

| Category* | Citation of document, with indication, where appropriate, of the relevant passages | Relevant to claim No. |
| --- | --- | --- |
| A | CN 114697166 A (HUAWEI TECHNOLOGIES CO., LTD.) 01 July 2022 (2022-07-01) description, paragraphs 167-224 | 1-30 |
| A | CN 114338306 A (DATANG MOBILE COMMUNICATIONS EQUIPMENT CO., LTD.) 12 April 2022 (2022-04-12) entire document | 1-30 |
| A | CN 113259275 A (DATANG MOBILE COMMUNICATIONS EQUIPMENT CO., LTD.) 13 August 2021 (2021-08-13) entire document | 1-30 |
| A | WO 2017200315 A1 (LG ELECTRONICS INC.) 23 November 2017 (2017-11-23) entire document | 1-30 |
| A | NATIONAL INSTRUMENTS. "Study of Time & Frequency Density of UE-Specific & Cell-Specific Phase Noise RS With Different CPE Estimation Techniques" *3GPP TSG RAN WG1 NR Ad-Hoc Meeting, R1-1700854*, 20 January 2017 (2017-01-20), entire document | 1-30 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2023** | **15 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/083908** |

| Patent document cited in search report | | | Publication date (day/month/year) | Patent family member(s) | | | Publication date (day/month/year) |
| --- | --- | --- | --- | --- | --- | --- | --- |
| CN | 114697166 | A | 01 July 2022 | WO | 2022143355 | A1 | 07 July 2022 |
| | | | | EP | 4246904 | A1 | 20 September 2023 |
| CN | 114338306 | A | 12 April 2022 | WO | 2022068684 | A1 | 07 April 2022 |
| CN | 113259275 | A | 13 August 2021 | None | | | |
| WO | 2017200315 | A1 | 23 November 2017 | None | | | |

Form PCT/ISA/210 (patent family annex) (July 2022)